# EUROPEAN PATENT APPLICATION

(11) **EP 4 468 227 A1**
(43) Date of publication of application: **27.11.2024**
(21) Application number: 24174288.1
(22) Date of filing: 06.05.2024
(51) Int. Cl.: G06Q 30/0251, G06Q 30/0201, H04W 4/021

(54) **TRADE FAIR POSITIONING SIGNAL PROCESSING SYSTEM AND METHOD FOR USING THE POSITIONING SIGNAL THEREOF**

(30) Priority: 24.05.2023 TW 112119407
(71) Applicant: Gunitech Corp., Hsinchu County 307 (TW)
(72) Inventor: HUNG, Chien-Ju, 307 Hsinchu County (TW); CHANG, Chih-Chieh, 307 Hsinchu County (TW); LIN, Xiao-Juan, 307 Hsinchu County (TW); WANG, Ming-Yi, 307 Hsinchu County (TW)
(74) Representative: Viering, Jentschura & Partner mbB Patent- und Rechtsanwälte

(57) **Abstract**

A trade fair positioning signal processing system and a method for using the positioning signal thereof are disclosed. The trade fair positioning signal processing system is used by a handheld mobile device of an attendee within a trade fair area, which includes a plurality of booths. The system includes a registration module, a management module, a plurality of positioning modules, a database, an analysis module, and an information dissemination module. The registration module provides attendee login. The management module calculates and generates a positioning data of the attendee, including a location and a residency time. The database is used to store the positioning information. When the analysis module determines that an attendee has stayed at a specific booth for more than a specific time, the information dissemination module is used to transmit a product introduction data belonging to the specific booth to the handheld mobile device.

## Description

### BACKGROUND OF THE INVENTION

### 1. Field of the Invention

The present invention relates to a trade fair positioning signal processing system and a method for using the positioning signal thereof, and specifically a trade fair positioning signal processing system and a method for using the positioning signal thereof that effectively utilizes positioning signals to transmit data to attendees at a trade fair.

### 2. Description of the Related Art

Currently, trade fair planning companies rely on traditional methods for collecting information from attendees. Booth exhibitors at a trade fair provide attendees with written brochures and related product introductions, and interested attendees leave their business cards for follow-up contacts after the fair. After the trade fair, booth exhibitors still need to spend manpower processing the business card information of attendees who visited their booths for further marketing and customer matching. This traditional approach involves physical brochures, product introductions, and attendee business cards, which not only contradict modern environmental concepts but also require significant manpower for attendee analysis and marketing during or after the trade fair.

As a result, it is necessary to invent a new trade fair positioning signal processing system and a method for using the positioning signal thereof to address the shortcomings of the prior art.

### SUMMARY OF THE INVENTION

It is a primary object of the present invention to provide a trade fair positioning signal processing system which effectively utilizes positioning signals to transmit information to attendees at a trade fair.

Another primary objective of the present invention is to provide a method for using a positioning signal in the above system.

To achieve the objects above, a trade fair positioning signal processing system for use in a trade fair area to be used by a handheld mobile device of an attendee is proposed. The trade fair area includes multiple booths, and the trade fair positioning signal processing system comprises a registration module, a management module, a plurality of positioning modules, a database, an analysis module, and an information dissemination module. The registration module allows the attendee to pre-register by logging in and entering registration information via the internet, or by scanning a trade fair identification barcode displayed in the trade fair area using his handheld mobile devices. The registration information includes whether the attendee is authorized to access associated information, whether they consent to the installation of a mobile application to enable wireless communication on his handheld mobile device, and whether they accept an identification barcode. The identification barcode is generated by the registration module based on the hardware identification information of the handheld mobile device of the attendee and transmitted to the device via the internet. The plurality of positioning modules are electrically connected to the management module. If the registration information indicates consent to install the mobile application, the mobile application enables the handheld mobile device to transmit wireless signals to a plurality of positioning modules. The management module calculates the positioning information of the attendee, including booth location and residency time, based on this communication. The database is electrically connected to both the registration module and the management module to store associated information, product introduction data, and positioning information of the attendee. The analysis module, connected to the database, analyzes the positioning information to determine if the attendee exceed a specific residency time at a specific booth. The information dissemination module, connected to the analysis module, allows the attendee exceeding the specific residency time to receive product introduction data from booths he has visited via the handheld mobile devices or through the associated information associated information of the attendee, serving the purpose of advertising and promotion.

The present invention also discloses a trade fair positioning signal processing system, wherein if the registration information indicates that the attendee is authorized to access all or part of the associated information, the information dissemination module further transmits all or part of the associated information of the attendee whose residency times exceed a specific time to the affiliated vendor of the specific booth.

The present invention further discloses a trade fair positioning signal processing system to achieve the above objectives. The management module scans the identification barcode displayed on the handheld mobile device, enters the registration module to verify the registration information, and activates the wireless communication signal transmission function of the handheld mobile device, where the identification barcode is not a screenshot.

The present invention also discloses a trade fair positioning signal processing system to achieve the above objectives, wherein the product introduction data is provided by the affiliated vendor. The product introduction data includes the booth vendor name, product name, product information, product specifications, event notifications, or product prices.

The present invention further discloses a trade fair positioning signal processing system to achieve the above objectives, wherein if the registration information indicates disagreement with installing the mobile application, the information dissemination module scans the booth barcode with the handheld mobile device and provides product introduction data to the handheld mobile device.

The method of using the positioning signal of the present invention involves utilizing the trade fair positioning signal processing system within the trade fair area via a handheld mobile device of an attendee. The trade fair area includes a plurality of booths, and the method comprises the following steps: providing the attendee with login and inputting a registration information, including the step of pre-login and inputting the registration information via an internet, or scanning a trade fair identification barcode displayed in the trade fair area with the handheld mobile device of the attendee to login and input the registration information; wherein the registration information includes an associated information about whether the attendee is authorized, whether the attendee has agreed to install a mobile application to enable the handheld mobile device to transmit a wireless communication signal, and whether the attendee has agreed to accept a recognition barcode, where the recognition barcode is generated based on a hardware identification information of the handheld mobile device of the attendee and transmitted to the handheld mobile device via the internet; if the registration information indicates consent to install the mobile application, a plurality of positioning modules are enabled to transmit the wireless communication signal to the handheld mobile device to calculate and generate a positioning information of the attendee, wherein the positioning information includes a booth location and a residency time; storing the associated information of the attendee, a product introduction data, and the positioning information; analyzing, based on the positioning information, whether the residency time of the attendee at a specific booth exceeds a specific time; and enabling an attendee whose residency time exceeds the specific time to receive the product introduction data associated with the specific booth via the handheld mobile device or through the associated information of the attendee.

The method of the positioning signal of the present invention also includes the following steps to achieve the above objectives: if the registration information indicates that the attendee has authorized all or part of the associated information, transmitting all or part of the authorized associated information of the attendee whose stay time exceeds the specific time to an affiliated vendor of the specific booth.

The method of using the positioning signal of the present invention also includes the following steps to achieve the above objectives: by scanning the identification barcode of the handheld mobile device, accessing the registration module to verify the registration information, and enabling the functionality of transmitting the wireless communication signal from the handheld mobile device, wherein the identification barcode is not a screenshot.

The method of using the positioning signal of the present invention also includes the step of providing the product introduction data from an affiliated vendor, wherein the product introduction data includes a booth vendor name, a product name, a product information, a product specification, an event notification, or a product price.

The method of using the positioning signal of the present invention further includes the following steps: if the registration information indicates that the installation of the mobile application is not agreed upon, allowing the handheld mobile device to scan a booth barcode, after which the product introduction data is provided to the handheld mobile device.

### BRIEF DESCRIPTION OF THE DRAWINGS

All of the objects and advantages of the present invention will become apparent from the following description of the accompanying drawings, which disclose several embodiments of the present invention. It is to be understood that the drawings are to be used for purposes of illustration only, and not as a definition of the invention.
Fig. 1 illustrates a system architecture diagram of the trade fair positioning signal processing system of the present invention.
Fig. 2 illustrates a schematic diagram of the trade fair area of the present invention.
Fig. 3 illustrates a flowchart of the steps in the method for using the positioning signal according to the present invention.

### DETAILED DESCRIPTION OF THE PREFERRED EMBODIMENTS

Hereafter, the technical content of the present invention will be better understood with reference to preferred embodiments.

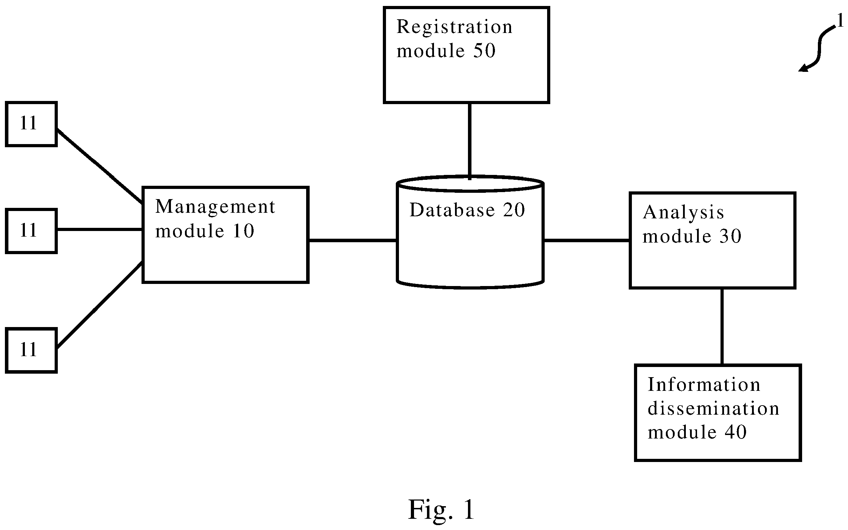

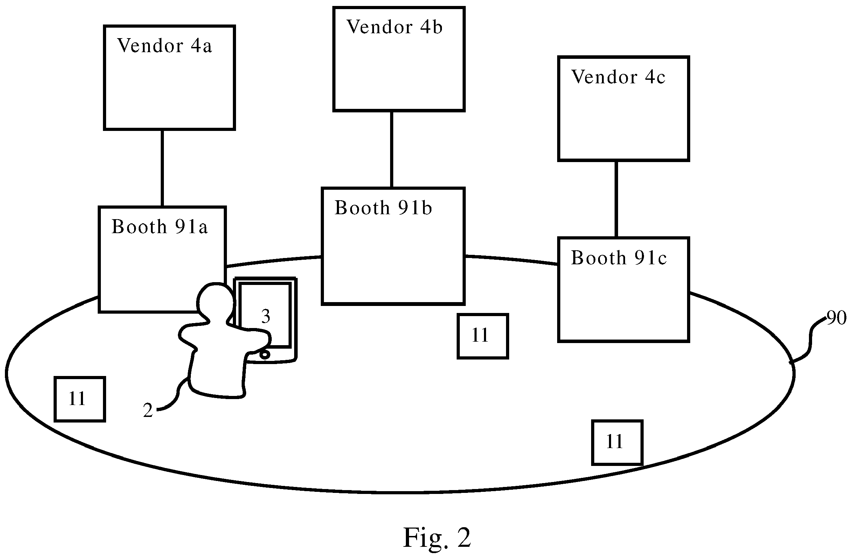

Please refer to Fig. 1, which illustrates a system architecture diagram of the trade fair positioning signal processing system of the present invention and Fig. 2, which illustrates a schematic diagram of the trade fair area of the present invention.

In an embodiment of the present invention, the trade fair positioning signal processing system 1 is constructed by the main planning vendor and is used within a trade fair area 90 during an exhibition period. The trade fair area 90 includes multiple booths 91a, 91b, 91c, which may belong to different or the same affiliated vendors 4a, 4b, 4c. The trade fair area 90 is designed for attendees 2 to visit, and it allows attendees 2 to access relevant information using handheld mobile devices 3. A handheld mobile device 3 can be a smartphone, tablet, or wearable electronic device, equipped with wireless communication modules, display screens, and other processing modules. As the functionality of the handheld mobile device 3 itself is not the focus of the present invention, it will not be further elaborated here.

The trade fair positioning signal processing system 1 of the present invention comprises a registration module 50, a management module 10, a plurality of positioning modules 11, a database 20, an analysis module 30, and an information dissemination module 40. The registration module 50 is designed to allow attendees 2 to input registration information before the exhibition opens by logging in via the internet and accessing the registration module 50. Alternatively, attendees 2 can scan the exhibition identification barcode displayed within the trade fair area 90 using their handheld mobile devices 3 on-site, thereby accessing the registration module 50 to input registration information. The registration information includes whether attendees 2 are authorized to access associated information, whether they agree to install an mobile application (app) to enable the handheld mobile device 3 to transmit wireless communication signals, and whether they accept the identification barcode. The identification barcode is generated by the registration module 50 based on the hardware identification information of the handheld mobile device 3 of the attendee 2, and the registration module 50 can transmit this barcode to the handheld mobile device 3 via the internet.

The management module 10 is electrically connected to a plurality of positioning modules 11, each of which has the capability to transmit and receive wireless communication signals and is appropriately distributed within the trade fair area 90. When an attendee 2 is within the trade fair area 90 and agrees to install the mobile application as per the registration information, the mobile application installed on the handheld mobile device 3 enables it to transmit wireless communication signals to communicate with the a plurality of positioning modules 11. The plurality of positioning modules 11 receive at least one wireless communication signal from the handheld mobile device 3, and the management module 10 calculates the positioning information of the attendee 2. This positioning information includes the location and residency time of the attendee 2 at various booths within the trade fair area 90. This allows for tracking the movements of the attendee 2 within the trade fair area 90 and identifying the affiliated vendors and products of specific booths that interest the attendee 2. Common positioning techniques include Time of Arrival (TOA), Angle of Arrival (AOA), and Received Signal Strength (RSS). The present invention does not limit the positioning calculation method of the management module 10, and since positioning technology is not the focus of the invention, its principles are not further elaborated here.

Therefore, in one embodiment of the present invention, an attendee 2 can register with the registration module 50 of the trade fair positioning signal processing system 1 via online access before the exhibition opens. According to privacy laws, the attendee 2 can choose to input all or part of his associated information, such as personal data, contact information, electronic business cards, or desired product information. The attendee 2 can also choose which information to share with the affiliated vendors 4a, 4b, 4c and save this information in the database 20. The attendee 2 can access the registration module 50 of the trade fair positioning signal processing system 1 via online access to select and install the mobile application provided by the trade fair positioning signal processing system 1 on his handheld mobile device 3. During the exhibition in the trade fair area 90, by installing the mobile application, the attendee 2 can activate the Bluetooth communication module, Wi-Fi module, or other detectable communication modules in his handheld mobile device 3 through the communication function provided by the mobile application. This enables the handheld mobile device 3 to transmit wireless communication signals to a plurality of positioning modules 11, allowing the management module 10 to perform calculations for tracking and positioning the attendee 2 within the trade fair area 90.

Alternatively, in another embodiment of the present invention, an attendee 2 can register directly through the registration module 50 of the trade fair positioning signal processing system 1 on the website belonging to the organizers of the exhibition before the exhibition begins. After registration, the attendee 2 can obtain an identification barcode via the internet, subject to review by the organizers or curators, and store it on his handheld mobile device. Therefore, the attendee 2 can also choose whether to download the mobile application. When the attendee 2 enters the trade fair area 90, the management module 10 scans the identification barcode displayed on the handheld mobile device 3 using methods such as manual scanning or automatic scanning by machines, and pairs it with the handheld mobile device 3.

The identification barcode can be one-dimensional or two-dimensional (such as a QR Code) in form, and the present invention is not limited to this. It should be noted that if the identification barcode displayed on the screen of the attendee 2's handheld mobile device 3 is obtained through a screenshot, or if the attendee 2 has not logged in to register with the registration module 50 of the trade fair positioning signal processing system 1, they will not be allowed to receive product introduction data or even enter the trade fair area 90.

In one embodiment of the present invention, the management module 10 can use the hardware identification information of the handheld mobile device 3 as positioning data to generate different identification barcodes, thereby distinguishing the identities of different attendees 2. The hardware identification information of the handheld mobile device 3 can be a Media Access Control Address (MAC), an International Mobile Equipment Identity (IMEI), or an Integrated Circuit Card IDentity (ICCID) of the SIM card. Each attendee 2 can be linked to the hardware identification information of one handheld mobile device 3, but the present invention is not limited to this.

In another scenario during the exhibition period, at the venue in the exhibition area 90, the attendee 2 can use the capturing module of his handheld mobile devices 3 to capture the exhibition identification barcodes on fixed objects at the entrance of the exhibition or outside the exhibition area. An exhibition identification barcode on a fixed object contains a specified receiving information address (URL), which accesses the registration module 50 of the organizer's exhibition positioning signal processing system 1 via the network. The network can be a mesh network, a local area network, or the internet, and the present invention is not limited to these options.

The database 20 is electronically connected to the registration module 50 and the management module 10 and is used to store the positioning information and registration information. The positioning information includes the location and duration of a stay at the booth. and the registration information is the information entered by the attendee 2 in the registration module 50, such as identity information, contact information, electronic business cards, or desired product information. The database 20 can also store data related to multiple booths 91a, 91b, 91c and their affiliated vendors 4a, 4b, 4c, including relevant product introduction data provided by the affiliated vendors 4a, 4b, 4c. The product introduction data includes the booth vendor name, product name, product information, product specifications, event notifications, or product prices. The analysis module 30 is electronically connected to the database 20 to analyze whether the attendee 2 has stayed at a specific booth for longer than a specific time, based on the positioning information.

The information dissemination module 40 is electronically connected to the analysis module 30. When the attendee 2 stays at a specific booth for more than a specific time (which can be 3 minutes or longer, but not limited to this), the information dissemination module 40 is used to enable the attendee 2 to receive the product introduction data of the specific booth from the affiliated vendor 4a through the wireless communication module 3a of the handheld mobile device 3. For example, if the attendee 2 stays at booth 91a for more than 3 minutes, the information dissemination module 40 transmits the product introduction data provided by the affiliated vendor 4a to the handheld mobile device 3 of the attendee 2. It should be noted that the affiliated vendors of specific booths must first obtain authorization from the main planning vendor of the trade fair positioning signal processing system 1. Only then can the information dissemination module 40 of the trade fair positioning signal processing system 1 transmit the product introduction data and advertisements provided by the affiliated vendor 4a to the handheld mobile device 3 of the attendee 2. Alternatively, the trade fair positioning signal processing system 1 can send the product introduction data and advertisements provided by the affiliated vendor 4a to the handheld mobile device 3 of the attendee 2 based on the contact information or email addresses in the associated information of the attendee 2's electronic business cards. Furthermore, the information dissemination module 40 can also transmit the associated information of an attendee 2 whose stay exceeds the specific time to the affiliated vendor 4a of the specific booth. For example, the electronic business card of the attendee 2 can be transmitted to the affiliated vendor 4a to allow the affiliated vendor 4a to independently develop potential customers.

In one embodiment of the present invention, the analysis module 30 is further used to collect and analyze the positioning information of multiple attendees 2. Therefore, in real-time or post-event scenarios, the analysis module 30 can transmit the information of multiple attendees 2, based on their presence at booths 91a, 91b, 91c, to the affiliated vendors 4a, 4b, 4c. Additionally, the analysis module 30 utilizes the collected positioning information during the exhibition period to perform big data analysis, track the demands of multiple attendees 2, and provide feedback to the relevant affiliated vendors 4a, 4b, 4c.

In another embodiment of the present invention, when an attendee 2 registers with the registration module 50 of the trade fair positioning signal processing system 1, if they do not agree to install the mobile application, they cannot activate the Bluetooth, Wi-Fi, or other communicative modules on his handheld mobile device 3. Therefore, the handheld mobile device 3 cannot utilize wireless communication signals with a plurality of positioning modules 11 for tracking the position of the attendee 2. In such a scenario, the information dissemination module 40 can be used when the attendee 2 actively uses his handheld mobile device 3 to scan the booth barcodes set up by affiliated vendors 4a, 4b, 4c at booths 91a, 91b, 91c. For instance, if the attendee 2 actively scans the booth barcode of booth 91a using his handheld mobile device 3, the information dissemination module 40 will directly provide the product introduction data of the affiliated vendor 4a to the handheld mobile device 3.

It should be noted that the trade fair positioning signal processing system 1 can be constructed as hardware devices, software programs combined with hardware, or firmware combined with hardware, such as a computer program product stored on a computer-readable medium that can be read and executed to achieve the functions of the present invention, but the present invention is not limited to these implementations. Furthermore, this embodiment only exemplifies a preferred embodiment of the present invention; to avoid redundancy, not all possible variations and combinations are described in detail. However, those skilled in the art should understand that not all modules or components mentioned above are necessary. To implement the present invention, other more detailed conventional modules or components may also be included. Modules or components may be omitted or modified as needed, and it is not implied that no other modules or components exist between any two modules.

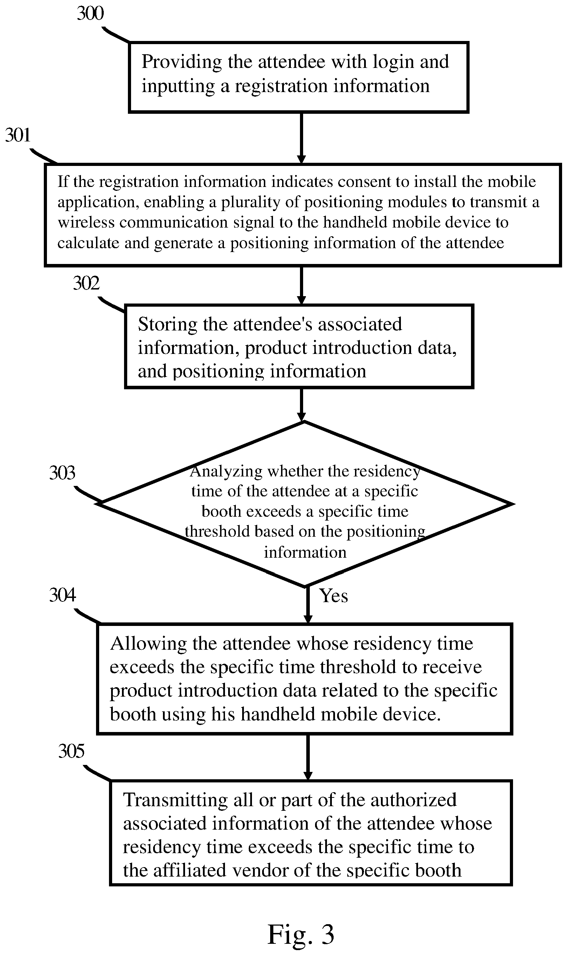

Please refer to Fig. 3, which illustrates a flowchart of the steps in the method for using the positioning signal according to the present invention. It is important to note that, although the following description uses the trade fair positioning signal processing system 1 as an example to illustrate the method for using the positioning signal of the present invention, the method is not limited to use with the same structure as the trade fair positioning signal processing system 1 described above.

The process begins with step 300: providing the attendee with login and inputting a registration information.

First, the attendee is provided with a login and prompted to input a registration information. The login and inputting the registration information can be entered in two ways:
before the event, by pre-registering and entering the information into the registration module; or
on-site at the trade fair area, by having the attendee scan the exhibition identification barcode displayed in the trade fair area using his handheld mobile device. However, the invention is not limited to these two methods. The registration information includes the authorization status of the attendee, associated information, consent to install the mobile application, and acceptance of the identification barcode. The identification barcode is generated by the registration module based on the hardware identification information of the handheld mobile device of the attendee, and the registration module can transmit this barcode to the handheld mobile device via the internet.

Next, the process continues with step 301: if the registration information indicates consent to install the mobile application, enabling a plurality of positioning modules to transmit a wireless communication signal to the handheld mobile device to calculate and generate a positioning information of the attendee.

Next, if the registration information indicates consent to install the mobile application, the mobile application will activate the communication features of the handheld mobile device 3. This allows the plurality of positioning modules 11 to pair with the handheld mobile device 3 to receive its wireless communication signals. The management module 10 then calculates and obtains the attendee's positioning information, which is subsequently stored in the database 20. This positioning information includes a booth location and a residency time of the attendee 2.

Then proceed with step 302: storing the attendee's associated information, product introduction data, and positioning information.

Next, the associated information input by the attendee into the registration module 50, along with the positioning information including booth location and residency time, will be stored in the database 20. Additionally, the database 20 can also store data related to multiple booths (e.g., booths 91a, 91b, 91c) and their affiliated vendors (e.g., affiliated vendors 4a, 4b, 4c).

Next, proceed with step 303: analyzing whether the residency time of the attendee at a specific booth exceeds a specific time threshold based on the positioning information.

Next, the analysis module 30 is used to analyze whether the attendee's residency time at specific booths 91a, 91b, 91c exceeds a specific time threshold based on the positioning information.

For example, in step 303, if the residency time of an attendee 2 at booth 91a exceeds 5 minutes, the system initiates step 304: allowing the attendee whose residency time exceeds the specific time threshold to receive product introduction data related to the specific booth using his handheld mobile device.

At this point, the information dissemination module 40 transmits the product introduction data provided by affiliated vendor 4a to the attendee 2's handheld mobile device 3, allowing the attendee 2 to receive the product introduction data from affiliated vendor 4a through his handheld mobile device 3.

Finally, proceed with step 305: transmitting all or part of the authorized associated information of the attendee whose residency time exceeds the specific time to the affiliated vendor of the specific booth.

The information dissemination module 40 can also further transmit all or part of the authorized associated information of the attendee whose residency time exceeds the specific time to the affiliated vendor 4a of the specific booth 91a, allowing the affiliated vendor 4a to develop potential customers on their own.

Please note that steps 304 and 305 described above are not limited to a single attendee 2 or multiple attendees 2, and the timing of transmitting information is not restricted. This means that the analysis module 30 can conduct big data analysis based on the positioning information of all attendees 2 at booths 91a, 91b, 91c, and then transmit all or part of the authorized associated information of the attendees 2 to the affiliated vendors 4a, 4b, 4c after the exhibition.

It should be noted that the application of trade fair positioning signals in this invention is not limited to the sequence of steps mentioned above. As long as the objectives of this invention are achieved, the sequence of steps described above can be modified accordingly.

By using the trade fair positioning signal processing system 1 of this invention, the analysis module 30 of the organizing party's trade fair positioning signal processing system 1 can effectively provide a business model for big data analysis to the exhibitor after the exhibition. This can be achieved by collecting data on the specific booth locations where attendees 2 registered their handheld mobile devices 3, or where attendees 2 scanned booth barcodes using the image capture module of their handheld mobile devices 3 to request product introduction data for the booth. This approach enhances marketing outreach, improves potential customer relationship management, and facilitates targeted advertising and exposure based on audience information, thereby achieving effective matchmaking at the trade fair.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. A trade fair positioning signal processing system (1), used in conjunction with a handheld mobile device (3) of an attendee (2) within a trade fair area (90), wherein the trade fair area (90) comprises a plurality of booths (91a); the trade fair positioning signal processing system (1) comprising:
a registration module (50), which provides the attendee (2) with the option to either pre-register by logging in via an internet and entering a registration information or by using the handheld mobile device (3) of the attendee (2) to scan a trade fair area (90) barcode displayed in the trade fair area (90), in order to log in and enter the registration information; wherein the registration information comprises an associated information about whether the attendee (2) is authorized,
whether the attendee (2) agrees to install an mobile application (APP) to enable the handheld mobile device (3) to transmit a wireless communication signal, and whether the attendee (2) accepts a recognition barcode; wherein the recognition barcode is generated by the registration module based on a hardware identification information of the handheld mobile device (3) of the attendee (2) and is transmitted to the handheld mobile device (3) via the internet;
a management module (10);
a plurality of positioning modules (11), connected electrically to the management module (10);
wherein if the registration information includes consent to install the mobile application, the mobile application is used to enable the handheld mobile device (3) to transmit a wireless communication signal to the plurality of positioning modules (11); consequently, the management module (10) calculates and generates a positioning information of the attendee (2),
including a booth location and a residency time;
a database (20), electrically connected to the registration module and the management module (10), used to store the associated information of the attendee (2), a product introduction data, and the positioning information;
an analysis module (30), electrically connected to the database (20), used to analyze whether the residency time of the attendee (2) at a specific booth (91a) exceeds a specific time threshold based on the positioning information; and
an information dissemination module (40), electrically connected to the analysis module (30),
used to allow the attendee (2) whose the residency time exceeds the specific time to receive the product introduction data associated with the specific booth (91a) via the handheld mobile device (3) belonging to the attendee (2) or through the associated information of the attendee (2) in order to achieve an advertising dissemination objective.

2. The trade fair positioning signal processing system (1) as claimed in Claim1, wherein if the registration information indicates that the attendee (2) has authorized all or part of the associated information, the information dissemination module (40) further transmits all or part of the authorized associated information of the attendee (2) whose residency time exceeds the specific time to an affiliated vendor (4a) of the specific booth (91a).

3. The trade fair positioning signal processing system (1) as claimed in Claim 1, wherein the management module (10) accesses the registration module by scanning the barcode displayed on the handheld mobile device (3) to confirm the registration information and activate the functionality of transmitting the wireless communication signal through the handheld mobile device (3), wherein the barcode is not a screenshot.

4. The trade fair positioning signal processing system (1) as claimed in Claim 1, wherein the product introduction data is provided by an affiliated vendor (4a) and includes a booth vendor name, a product name, a product information, a product specification, an event notification, or a product price.

5. The trade fair positioning signal processing system (1) as claimed in Claim 1, wherein if the registration information does not indicate consent to install the mobile application, the information dissemination module (40) provides the product introduction data to the handheld mobile device (3) after the handheld mobile device (3) scans a booth barcode.

6. A method for using a positioning signal, using a trade fair positioning signal processing system (1) within a trade fair area to be used by a handheld mobile device (3) of an attendee (2), wherein the trade fair area (90) comprises a plurality of booths (91a), the method comprising the following steps:
providing the attendee (2) with login and inputting a registration information, including the steps of pre-login and inputting the registration information via an internet, or scanning a trade fair identification barcode displayed in the trade fair area (90) with the handheld mobile device (3) of the attendee (2) to login and input the registration information; wherein the registration information includes an associated information about the authorization status of the attendee (2),
consent to install a mobile application to enable the handheld mobile device (3) to transmit a wireless communication signal, and acceptance of a recognition barcode, where the recognition barcode is generated based on a hardware identification information of the handheld mobile device (3) of the attendee (2) and transmitted to the handheld mobile device (3) via the internet;
if the registration information indicates consent to install the mobile application, enabling a plurality of positioning modules (11) to transmit the wireless communication signal to the handheld mobile device (3) to calculate and generate a positioning information of the attendee (2), wherein the positioning information includes a booth location and a residency time;
storing the associated information of the attendee (2), a product introduction data, and the positioning information;
analyzing, based on the positioning information, whether the residency time of the attendee (2) at a specific booth (91a) exceeds a specific time; and
enabling the attendee (2) whose residency time exceeds the specific time to receive the product introduction data associated with the specific booth (91a) via the handheld mobile device (3) or through the associated information of the attendee (2).

7. The method for using the positioning signal as claimed in Claim 6 further comprising the following steps:
storing the connection requirement as a preset connection condition; and
if the registration information indicates that the attendee (2) has authorized all or part of the associated information, transmitting all or part of the authorized associated information of the attendee (2) whose stay time exceeds the specific time to an affiliated vendor (4a) of the specific booth (91a).

8. The method for using the positioning signal as claimed in Claim 6 further comprising the following steps:
by scanning the identification barcode of the handheld mobile device (3), accessing the registration module to verify the registration information, and enabling the functionality of transmitting the wireless communication signal from the handheld mobile device (3), wherein
the identification barcode is not a screenshot.

9. The method for using the positioning signal as claimed in Claim 6 further comprising the step of providing the product introduction data from an affiliated vendor (4a), wherein the product introduction data includes a booth vendor name, a product name, a product information, a product specification, an event notification, or a product price.

10. The method for using the positioning signal as claimed in Claim 6 comprising the following steps:
if the registration information indicates a lack of consent to the installation of the mobile application, allowing the handheld mobile device (3) to scan a booth barcode, after which the product introduction data is provided to the handheld mobile device (3).
